# EUROPÄISCHE PATENTSCHRIFT

(11) **EP 0 970 560 B1**
(45) Veröffentlichungstag und Bekanntmachung des Hinweises auf die Patenterteilung: **16.08.2001**
(21) Anmeldenummer: 98922600.6
(22) Anmeldetag: 13.03.1998
(51) Int. Cl.: H02M 1/14, H02M 1/12, B60L 9/30

(54) **SCHALTUNGSANORDNUNG**
CIRCUIT
CIRCUIT

(30) Priorität: 25.03.1997 DE 19712564
(43) Veröffentlichungstag der Anmeldung: 12.01.2000
(73) Patentinhaber: SIEMENS AKTIENGESELLSCHAFT, 80333 München (DE)
(72) Erfinder: BAKRAN, Mark-Matthias, D-91054 Erlangen (DE); MARQUARDT, Rainer, D-91074 Herzogenaurach (DE); TEIGELKÖTTER, Johannes, D-91074 Herzogenaurach (DE)
(86) Internationale Anmeldenummer: DE9800753
(87) Internationale Veröffentlichungsnummer: WO9843343

(56) Entgegenhaltungen:
- EP-A- 0 637 121
- DE-A- 3 817 652
- DE-C- 19 509 329
- US-A- 4 195 334

## Beschreibung

Die Erfindung betrifft eine mehrsystemfähige Schaltungsanordnung.

Derartige Schaltungsanordnungen sind für Gleichstromantriebe aus der DE 195 09 329 C1 bekannt. Im bekannten Fall ist ein motorseitiger Stromrichter über seine Eingangsanschlüsse an ein Gleichspannungsnetz geschaltet. Weiterhin ist wenigstens ein Zwischenkreiskondensator parallel zum motorseitigen Stromrichter sowie wenigstens eine Netzdrossel in Reihe zum Zwischenkreiskondensator geschaltet. Die Netzdrossel weist wenigstens einen Anzapfungspunkt auf, an den wenigstens ein RC-Kreis parallel zum Zwischenkreiskondensator geschaltet ist, wobei der RC-Kreis wenigstens eine Kapazität und wenigstens einen dazu in Reihe angeordneten Widerstand umfaßt. Durch die bekannte Schaltungsanordnung kann bei Gleichstromfahrzeugen, ohne unnötig große Dimensionierung des Zwischenkreiskondensators und der Netzinduktivität, eine Reduzierung der vom motorseitigen Stromrichter in das Gleichspannungsnetz zurückgespeisten Oberschwingungsströme oberhalb einer vorgebbaren Frequenz erreicht werden. Die bekannnte Schaltungsanordnung ermöglicht zwar die Verwendung eines kleineren Zwischenkreiskondensators und einer kleineren Netzdrossel, wodurch auch die Verlustleistung reduziert wird, die Schaltungsanordnung ist jedoch nur für Gleichstromfahrzeuge geeignet. Bei der bekannten Schaltungsanordnung ist im allgemeinen ein einziger RC-Kreis vollkommen ausreichend. Es ist jedoch genauso gut möglich, mehrere RC-Kreise parallel zum Zwischenkreiskondensator zu schalten, wobei alle RC-Kreise entweder an einen gemeinsamen Anzapfungspunkt der Netzdrossel geführt sein können, oder für jeden RC-Kreis ein eigener Anzapfungspunkt an der Netzdrossel vorgesehen werden kann. Wird bei mehreren RC-Kreisen jeder RC-Kreis an einen eigenen Anzapfungspunkt geführt, dann bilden alle RC-Kreise einzelne Filterstufen, die auf verschiedene Frequenzen abgestimmt werden können.

Weiterhin ist aus dem DE 295 10 986 U1 eine Schaltungsanordnung für Gleichstromantriebe bekannt, die dazu dient, Oberschwingungsströme, die ein als Gleichstromsteller ausgebildeter motorseitiger Stromrichter in das Gleichspannungsnetz zurückspeist, zu reduzieren. Bei dieser Schaltungsanordnung ist ein motorseitiger Stromrichter über seine Eingangsanschlüsse an ein Gleichspannungsnetz geschaltet und wenigstens ein Zwischenkreiskondensator parallel zum motorseitigen Stromrichter sowie wenigstens eine Netzdrossel in Reihe zum Zwischenkreiskondensator geschaltet. Parallel zum Zwischenkreiskondensator ist wenigstens ein LC-Reihenschwingkreis aus wenigstens einer Kapazität und wenigstens einer Induktivität geschaltet.

Ferner ist es bei Mehrsystemfahrzeugen allgemein bekannt, daß der für Wechselstrom vorgesehene Saugkreis bei Gleichstromeinspeisung nur als vergrößerter Zwischenkreiskondensator (Zwischenkreiskondensator) verwendet wird.

Aufgabe der vorliegenden Erfindung ist es deshalb, eine mehrsystemfähige Schaltungsanordnung zu schaffen, die bei Gleichstromeinspeisung, trotz minimaler Dimensionierung der Filterkomponenten, eine optimale Reduzierung der vom motorseitigen Stromrichter in das Gleichspannungsnetz zurückgespeisten Oberschwingungsströme oberhalb einer vorgebbaren Frequenz ermöglicht.

Die Aufgabe wird bei einer mehrsystemfähigen Schaltungsanordnung erfindungsgemäß durch die Merkmale des Anspruchs 1 gelöst. Vorteilhafte Ausgestaltungen der Erfindung sind in den weiteren Ansprüchen beschrieben.

Bei der mehrsystemfähigen Schaltungsanordnung gemäß Anspruch 1 ist ist ein motorseitiger Stromrichter parallel zu einem Zwischenkreiskondensator geschaltet, zu dem wenigstens eine Netzdrossel in Reihe geschaltet ist. Die Netzdrossel ist mit ihrem Anschluß an ein DC-Versorgungsnetz (Gleichspannungsnetz) geschaltet und über einen Anschluß des motorseitigen Stromrichters ist der zweite Pol des DC-Versorgungsnetzes angeschlossen. Im AC-Betrieb ist der motorseitige Stromrichter zu wenigstens einem Eingangsstromrichter, der an ein AC-Versorgungsnetz (Wechselspannungsnetz) geschaltetet ist, parallel geschaltet Die Netzdrossel weist wenigstens einen Anzapfungspunkt auf, an den im DC-Betrieb wenigstens ein RC-Kreis parallel zum Zwischenkreiskondensator über wenigstens einen Schalter geschaltet wird, wobei der RC-Kreis wenigstens eine Kapazität sowie wenigstens einen dazu in Reihe angeordneten Widerstand aufweist. Weiterhin umfaßt die erfindungsgemäße Schaltungsanordnung wenigstens eine Saugkreisdrossel, die in Reihe zur Netzdrossel angeordnet ist, Bei Wechselstromeinspeisung, also im AC-Betrieb, bildet die Kapazität mit der Saugkreisdrossel einen Saugkreis, wohingegen bei Gleichstromeinspeisung, also im DC-Betrieb, die Kapazität zusammen mit dem Widerstand, der an den Anzapfungspunkt der Netzdrossel geschaltet ist, nach Umschaltung wenigstens eines eines Schalters, einen RC-Kreis bildet.

Im AC-Betrieb generiert der Eingangsstromrichter eine DC-Spannung, die von einer Wechselspannung doppelter Netzfrequenz überlagert ist. Zur Kompensation dieser Frequenz werden auf AC-Fahrzeugen sogenannte Saugkreise eingesetzt, die auf die doppelte Netzfrequenz abgestimmt sind.

Bei der erfindungsgemäßen Schaltungsanordnung wird die Kapazität des RC-Kreises im AC-Betrieb als Saugkreiskondensator genutzt und bildet zusammen mit der Saugkreisdrossel einen Saugkreis. Im DC-Betrieb bildet die Kapazität mit dem Widerstand einen RC-Kreis. Im DC-Betrieb wird damit die Kapazität des RC-Kreises von der Kapazität gebildet, die im AC-Betrieb als Saugkreiskondensator dient. Außerdem wird im DC-Betrieb die Saugkreisdrossel, die ebenso wie die Netzdrossel in Reihe zum Zwischenkreiskondensator geschaltet ist, als weitere Netzdrossel mit benutzt. Damit werden die für den AC-Betrieb benötigten Bauteile im DC-Betrieb als Netzfilter genutzt.

Bei der erfindungsgemäßen Schaltungsanordnung bilden der RC-Kreis und die zwischen RC-Kreis und Zwischenkreiskondensator geschaltete Teildrossel der Netzdrossel ein T-Filter. Das T-Filter wird sinnvollerweise auf die Frequenz abgestimmt, bei der die vom Betreiber gewünschte maximale Eingangs-Impedanz zu erzielen ist. Für die Dämpfung wird der Widerstand des RC-Kreises so gewählt, daß die Eingangs-Impedanz oberhalb der ersten Resonanz nie wieder kapazitiv wird. Das T-Filter ermöglicht bei der Netzdrossel eine erhebliche Reduzierung der Baugröße.

Bei einer Ausgestaltung gemäß Anspruch 3 werden alle bei der Schaltungsanordnung vorhandenen Bauteile sowohl im AC-Betrieb als auch im DC-Betrieb genutzt.

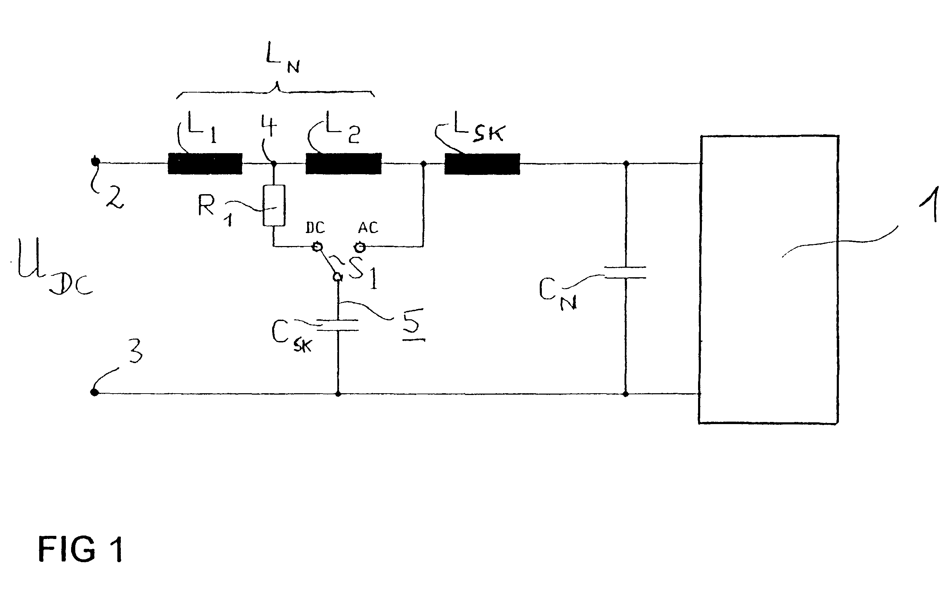

Weitere Vorteile und Einzelheiten der Erfindung ergeben sich aus der nachfolgenden Beschreibung von vier in den FIG 1 bis 4 im DC-Betrieb dargestellten Ausführungsbeispielen der erfindungsgemäßen Schaltungsanordnung.

In den FIG 1 bis 4 ist mit 1 ein motorseitiger Stromrichter bezeichnet, der vorzugsweise als Pulswechselrichter ausgebildet ist. Der Pulswechselrichter 1 ist über seine Eingangsanschlüsse 2 und 3 an ein Versorgungsnetz, im DC-Betrieb an ein Gleichspannungsnetz U_{DC}, geschaltet. Parallel zum Pulswechselrichter 1 ist ein Zwischenkreiskondensator C_{N} geschaltet.

Weiterhin ist bei den in den FIG 1 bis 4 gezeigten Ausführungsbeispielen der erfindungsgemäßen Schaltungsanordnung eine Netzdrossel L_{N} in Reihe zum Zwischenkreiskondensator C_{N} geschaltet.

Erfindungsgemäß weist die Netzdrossel L_{N} einen Anzapfungspunkt 4 auf, der im gezeigten Ausführungsbeispiel mittig angeordnet ist. Die Netzdrossel L_{N} wird dadurch in zwei gleich große Teildrosseln L₁ und L₂ geteilt. An den Anzapfungspunkt 4 ist ein RC-Kreis 5 parallel zum Zwischenkreiskondensator C_{N} geschaltet. Der RC-Kreis 5 umfaßt eine Kapazität C_{SK} und einen dazu in Reihe angeordneten Widerstand R₁. Weiterhin ist eine Saugkreisdrossel L_{SK} in Reihe zur Netzdrossel L_{N} geschaltet.

Über einen Schalter S₁ ist die Kapazität C_{SK} alternativ an den Widerstand R₁ oder an die Saugkreisdrossel L_{SK} schaltbar. Damit bildet die Kapazität C_{SK} im DC-Betrieb mit dem Widerstand R₁ einen RC-Kreis 5. Der Widerstand R₁ bildet hierbei den Dämpfungswiderstand für das Einfach-T-Filter. Im AC-Betrieb bildet die Kapazität C_{SK} mit der Saugkreisdrossel L_{SK} einen Saugkreis. Die beiden möglichen Stellungen des Schalters S₁ sind mit DC und mit AC bezeichnet. Im DC-Betrieb wird damit die Kapazität des RC-Kreises 5 von der Kapazität C_{SK} gebildet, die im AC-Betrieb als Saugkreiskondensator dient. Außerdem wird im DC-Betrieb die Saugkreisdrossel L_{SK}, die ebenso wie die Netzdrossel L_{N} in Reihe zum Zwischenkreiskondensator C_{N} geschaltet ist, als weitere Netzdrossel mit benutzt. Damit werden die für den AC-Betrieb benötigten Bauteile im DC-Betrieb als Netzfilter genutzt.

Bei der Dimensionierung des Saugkreises (AC-Betrieb) können die Teildrosseln L₁ und L₂ auch derart bestimmt werden, daß die Teildrossel L₂ den Wert Null annimmt.

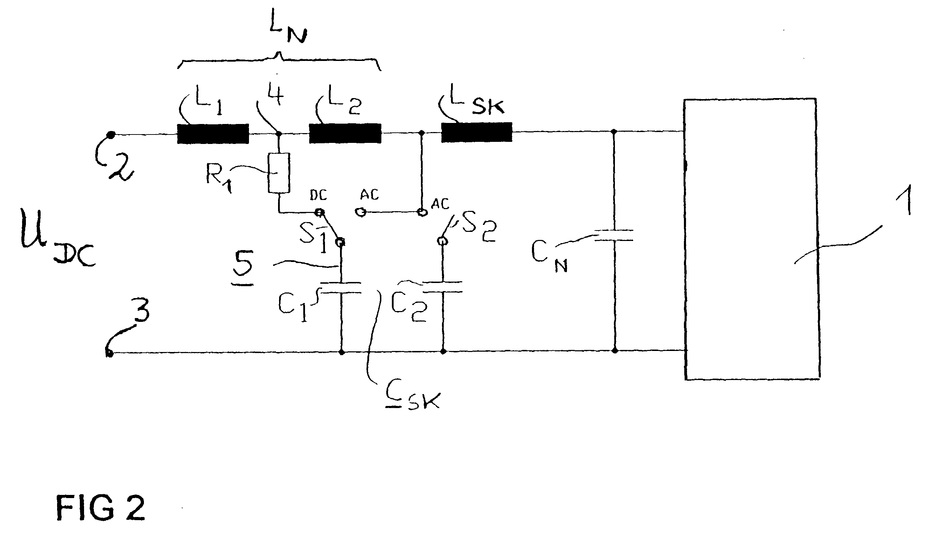

Um das DC-Filter noch genauer zu dimensionieren, sind die in den FIG 2 bis 4 gezeigten Ausführungsbeispiele besonders vorteilhaft.

Bei der in FIG 2 dargestellten Schaltungsanordnung umfaßt die Kapazität C_{SK} zwei parallel zueinander angeordnete Teilkondensatoren C₁ und C₂. Der Teilkondensator C₁ wird über den Schalter S₁ entweder in Reihe zum Widerstand R₁ geschaltet und bildet dann den RC-Kreis 5 oder er ist in der Stellung AC an die Saugkreisdrossel L_{SK} geschaltet und bildet einen Saugkreis. Im AC-Betrieb wird zusätzlich zum Teilkondensator C₁ auch noch der Teilkondensator C₂ an die Saugkreisdrossel L_{SK} und damit in den Saugkreis geschaltet. Im DC-Betrieb ist der Teilkondensator C₂ abgetrennt. Bei der in FIG 2 gezeigten Ausgestaltung der erfindungsgemäßen Schaltungsanordnung erlaubt eine optimale Dimensionierung des T-Filters im Hinblick auf eine stark reduzierte Gesamtinduktivität der Schaltungsanordnung.

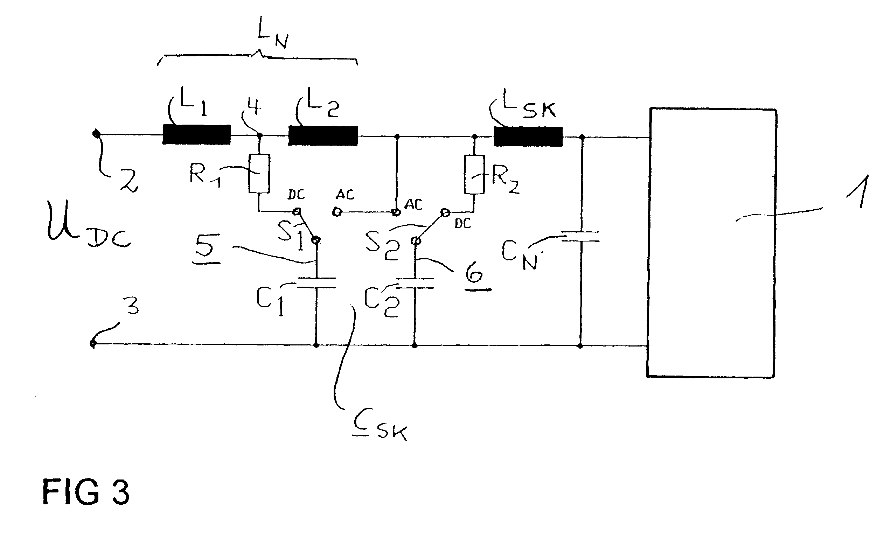

Bei der Schaltungsanordnung gemäß FIG 3 umfaßt die Kapazität C_{SK} ebenfalls zwei Teilkondensatoren C₁ und C₂. Der Teilkondensator C₁ ist wiederum über einen Schalter S₁ in Reihe zu einem Widerstand R₁ schaltbar. Analog ist der Teilkondensator C₂ über einen Schalter S₂ an einen weiteren Widerstand R₂ schaltbar. Der Teilkondensator C₂ bildet mit dem Widerstand R₂ einen weiteren RC-Kreis 6, der ebenfalls parallel zum Zwischenkreiskondensator C_{N} geschaltet ist. Diese Schaltungsanordnung ist für typische Filterauslegungen gut zu dimensionieren. Darüber hinaus werden alle Elemente der Schaltungsanordnung genutzt. Weiterhin ist eine starke Entkopplung der Teildrosseln L₁ und L₂ nicht notwendig, da die Saugkreisdrossel L_{SK} immer gut entkoppelt ist. Für Mehrsystemfahrzeuge stellt diese Ausführungsform der erfindungsgemäßen Schaltungsanordnung die vorteilhafteste Ausgestaltung dar.

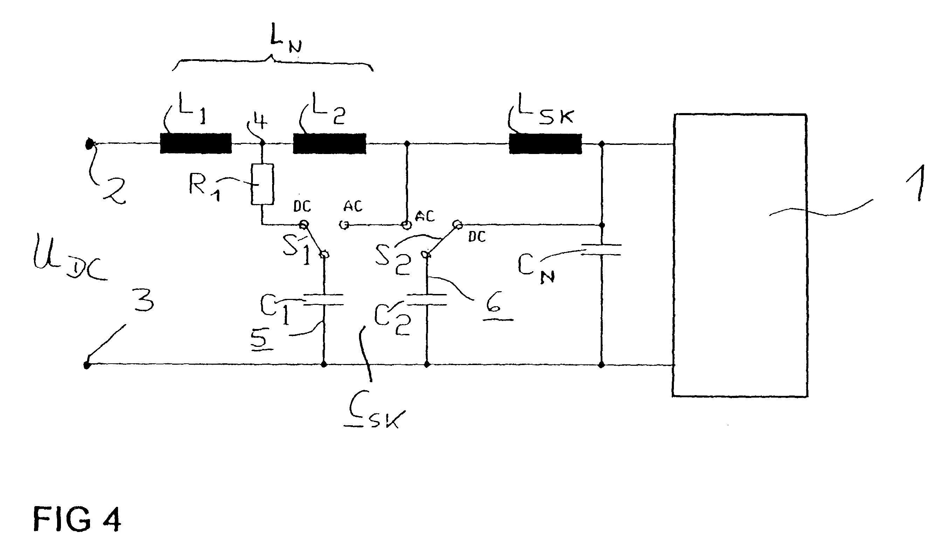

Die Ausführungsform gemäß FIG 4 unterscheidet sich von der Schaltungsanordnung gemäß FIG 3 dadurch, daß im DC-Betrieb der zweite Teilkondensator C₂ über den Schalter S₂ parallel zum Zwischenkreiskondensator C_{N} und damit zum Zwischenkreis schaltbar ist. Im DC-Betrieb wird der Teilkondensator C₂ somit dazu benutzt, einen vergrößerten Zwischenkreis zu erhalten. Im AC-Betrieb dienen beide Teilkondensatoren C₁ und C₂ demgegenüber als Saugkreiskondensator. Je nach konstruktiver Anordnungen der Kondensatoren kann es notwendig sein, den Teilkondensator C₂ mit einer Dämpfung an den Zwischenkreiskondensator C_{N} zu schalten, um hochfrequente Schwingungen zwischen dem Teilkondensator C₂ und dem Zwischenkreiskondensator C_{N} zu vermeiden.

Für die in den FIG 3 und 4 dargestellten Ausführungsbeispiele (Doppel-T-Filter) der erfindungsgemäßen Schaltungsanordnung gilt allgemein, daß im DC-Betrieb die erste Filterstufe von dem Teilkondensator C₁ und der Teildrossel L₂ und die zweite Filterstufe von dem Teilkondensator C₂ und der Saugkreisdrossel L_{SK} gebildet wird.

Die erste Filterstufe wird sinnvollerweise auf die Frequenz abgestimmt, bei der die vom Betreiber gewünschte maximale Eingangs-Impedanz Z zu erzielen ist. Für die Dämpfung wird der Widerstand R₁ so gewählt, daß die Eingangs-Impedanz oberhalb der ersten Resonanz nie wieder kapazitiv wird. Die erste Filterstufe ermöglicht bei der Netzdrossel L_{N} eine erhebliche Reduzierung der Baugröße.

Die zweite Filterstufe wird entweder nach Maßgabe der vorhandenen Elemente aufgebaut oder auf besondere Störstromfrequenzen abgestimmt. Die Dämpfung wird durch den Widerstand R₂ so eingestellt, daß keine Schwingungen in der ersten und in der zweiten Filterstufe angeregt werden können. Die zweite Filterstufe verbessert die Störstromunterdrückung.

## Patentansprüche

1. Mehrsystemfähige Schaltungsanordnung, die folgende Merkmale umfaßt:
- im DC-Betrieb ist ein motorseitiger Stromrichter (1) parallel zu einem Zwischenkreiskondensator (C_{N}) geschaltet, zu dem wenigstens eine Netzdrossel (L_{N}) in Reihe geschaltet ist, wobei die Netzdrossel (L_{N}) mit ihrem Anschluß (2) an ein DC-Versorgungsnetz geschaltet ist und über einen Anschluß (3) des motorseitigen Stromrichters (1) der zweite Pol des DC-Versorgungsnetzes angeschlossen ist,
- im AC-Betrieb ist der motorseitige Stromrichter (1) zu wenigstens einem an ein AC-Versorgungsnetz geschalteten Eingangsstromrichter parallel geschaltet,
- die Netzdrossel (L_{N}) weist wenigstens einen Anzapfungspunkt (4) auf, an den im DC-Betrieb wenigstens ein RC-Kreis (5, 6) parallel zum Zwischenkreiskondensator (C_{N}) über wenigstens einen Schalter (S1, S2) geschaltet wird, wobei der RC-Kreis (5, 6) wenigstens eine Kapazität (C_{SK}) sowie wenigstens einen dazu in Reihe angeordneten Widerstand (R₁, R₂) aufweist,
- wenigstens eine Saugkreisdrossel (L_{SK}). ist in Reihe zur Netzdrossel (L_{N}) angeordnet,
- die Kapazität (C_{SK}) bildet im AC-Betrieb mit der Saugkreisdrossel (L_{SK}) einen Saugkreis und nach Umschaltung wenigstens eines Schalters (S1, S2) im DC-Betrieb mit dem Widerstand (R₁, R₂) einen RC-Kreis (5, 6).

2. Mehrsystemfähige Schaltungsanordnung nach Anspruch 1, **mit folgenden Merkmalen:**
- die Kapazität (C_{SK}) umfaßt zwei parallel zueinander angeordnete Teilkondensatoren (C₁, C₂), wobei
- im AC-Betrieb beide Teilkondensatoren (C₁, C₂) an die Saugkreisdrossel (L_{SK}) geschaltet sind und
- im DC-Betrieb wenigstens ein Teilkondensator (C₁) an den Widerstand (R₁) geschaltet ist.

3. Mehrsystemfähige Schaltungsanordnung nach Anspruch 1, **mit folgenden Merkmalen:**
- der Zwischenkreiskondensator (C_{N}) umfaßt zwei parallel zueinander angeordnete Teilkondensatoren (C₁, C₂), wobei
- im AC-Betrieb beide Teilkondensatoren (C₁, C₂) an die Saugkreisdrossel (L_{SK}) geschaltet sind und
- im DC-Betrieb der eine Teilkondensator (C₁) mit dem Widerstand (R₁) einen ersten RC-Kreis (5) bildet und der andere Teilkondensator (C₂) mit einem weiteren Widerstand (R₂) einen zweiten RC-Kreis (6) bildet, der parallel zum Zwischenkreiskondensator (C_{N}) an die Saugkreisdrossel (L_{SK}) geschaltet ist.

4. Mehrsystemfähige Schaltungsanordnung nach Anspruch 1, **mit folgenden Merkmalen:**
- der Zwischenkreiskondensator (C_{N}) umfaßt zwei parallel zueinander angeordnete Teilkondensatoren (C₁, C₂), wobei
- im AC-Betrieb beide Teilkondensatoren (C₁, C₂) an die Saugkreisdrossel (L_{SK}) geschaltet sind und
- im DC-Betrieb der eine Teilkondensator (C₁) mit dem Widerstand (R₁) einen RC-Kreis (5) und der andere Teilkondensator (C₂) parallel zum Zwischenkreiskondensator (C_{N}) geschaltet ist.

## Claims

1. Multiple-system-capable circuit arrangement which has the following characteristics:
- in DC operation a motor-side power converter (1) is connected parallel to a link capacitor (C_{N}) to which at least one line reactor (L_{N}) is connected in series, with the line reactor (L_{N}) being connected at its terminal (2) to a DC supply network and through a terminal (3) of the motor-side power converter (1) of the second pole of the DC supply network,
- in AC operation, the motor-side power converter (1) is connected parallel to at least one input power converter connected to an AC supply network,
- the line reactor (L_{N}) has at least one tapping point (4) at which in DC operation at least one RC circuit (5, 6) is connected in parallel to the link capacitor (C_{N}) through at least one switch (S₁, S₂), with the RC circuit (5, 6) having at least one capacitor (C_{SK}) and at least one resistor (R₁, R₂) arranged in series therewith,
- at least one series-resonant reactor (L_{SK}) is arranged in series with the line reactor (L_{N}),
- in AC operation, the capacitor (C_{SK}) in AC operation together with the series-resonant reactor (L_{SK}) forms a series-resonant circuit and after switchover of at least one switch (S₁, S₂), it together with the resistor (R₁, R₂) forms an RC circuit (5, 6) in DC operation.

2. Multiple-system-capable circuit arrangement according to Claim 1 with the following characteristics:
- the capacitor (C_{SK}) comprises two capacitor elements (C₁, C₂) arranged parallel to each other, with
- both capacitor elements (C₁, C₂) in AC operation being connected to the series-resonant reactor (L_{SK}) and
- in DC operation at least one capacitor element (C₁) being connected to the resistor (R₁).

3. Multiple-system-capable circuit arrangement according to Claim 1 with the following characteristics:
- the link capacitor (C_{N}) comprises two capacitor elements (C₁, C₂) connected parallel to each other, with
- in AC operation both capacitor elements (C₁, C₂) being connected to the series-resonant reactor (L_{SK}),
- and in DC operation one capacitor element (C₁) together with the resistor (R₁) forming a first RC circuit (5) and the other capacitor element (C₂) together with another resistor (R₂) forming a second RC circuit (6) which is connected to the series-resonant reactor (L_{SK}) parallel to the link capacitor (C_{N}).

4. Multiple-system-capable circuit arrangement according to Claim 1 with the following characteristics:
- the link capacitor (C_{N}) comprises two capacitor elements (C₁, C₂) arranged parallel to each other with
- in AC operation both capacitor elements (C₁, C₂) being connected to the link reactor (L_{SK}), and
- in DC operation one capacitor element (C₁) together with the resistor (R₁) forming an RC circuit (5) and the other capacitor element (C₂) being connected parallel to the link capacitor (C_{N}).

## Revendications

1. Circuit à possibilité polycourant qui comprend les caractéristiques suivantes :
- en fonctionnement CC, un convertisseur côté moteur (1) est branché en parallèle avec un condensateur de circuit intermédiaire (C_{N}) avec lequel au moins une bobine de réseau (L_{N}) est branchée en série, la bobine de réseau (L_{N}) étant branchée par sa borne (2) à un réseau d'alimentation CC et le deuxième pôle du réseau d'alimentation CC étant raccordé par l'intermédiaire d'une borne (3) du convertisseur côté moteur (1),
- en fonctionnement CA, le convertisseur côté moteur (1) est branché en parallèle avec au moins un convertisseur d'entrée branché à un réseau d'alimentation CA,
- la bobine de réseau (L_{N}) comporte au moins un point de prélèvement (4) auquel, en fonctionnement CC, au moins un circuit RC (5, 6) est branché en parallèle avec le condensateur de circuit intermédiaire (C_{N}) par l'intermédiaire d'au moins un commutateur (S₁, S₂), le circuit RC (5, 6) comportant au moins une capacité (C_{SK}) et au moins une résistance (R₁, R₂) branchée en série,
- au moins une bobine de circuit d'absorption (L_{SK}) est branchée en série avec la bobine de réseau (L_{N}),
- la capacité (C_{SK}) forme en fonctionnement CA avec la bobine de circuit d'absorption (L_{SK}) un circuit d'absorption et en fonctionnement CC, après commutation d'au moins un commutateur (S₁, S₂), avec la résistance (R₁, R₂) un circuit RC (5, 6).

2. Circuit à possibilité polycourant selon la revendication 1, avec les caractéristiques suivantes :
- la capacité (C_{SK}) comprend deux condensateurs partiels (C₁, C₂) branchés en parallèle,
- en fonctionnement CA, les deux condensateurs partiels (C₁, C₂) sont branchés à la bobine de circuit d'absorption (L_{SK}), et
- en fonctionnement CC, au moins un condensateur partiel (C₁) est branché à la résistance (R₁).

3. Circuit à possibilité polycourant selon la revendication 1, avec les caractéristiques suivantes :
- le condensateur de circuit intermédiaire (C_{N}) comprend deux condensateurs partiels (C₁, C₂) branchés en parallèle,
- en fonctionnement CA, les deux condensateurs partiels (C₁, C₂) sont branchés à la bobine de circuit d'absorption (L_{SK}), et
- en fonctionnement CC, un condensateur partiel (C₁) forme avec la résistance (R₁) un premier circuit RC (5) et l'autre condensateur partiel (C₂) forme avec une autre résistance (R₂) un deuxième circuit RC (6) qui est branché en parallèle avec le condensateur de circuit intermédiaire (C_{N}) à la bobine de circuit d'absorption (L_{SK}).

4. Circuit à possibilité polycourant selon la revendication 1, avec les caractéristiques suivantes :
- le condensateur de circuit intermédiaire (C_{N}) comprend deux condensateurs partiels (C₁, C₂) branchés en parallèle,
- en fonctionnement CA, les deux condensateurs partiels (C₁, C₂) sont branchés à la bobine de circuit d'absorption (L_{SK}), et
- en fonctionnement CC, un condensateur partiel (C₁) forme avec la résistance (R₁) un circuit RC (5) et l'autre condensateur partiel (C₂) est branché en parallèle avec le condensateur de circuit intermédiaire (C_{N}).
